# EUROPÄISCHE PATENTSCHRIFT

(11) **EP 1 981 378 B1**
(45) Veröffentlichungstag und Bekanntmachung des Hinweises auf die Patenterteilung: **05.05.2010**
(21) Anmeldenummer: 08701479.1
(22) Anmeldetag: 15.01.2008
(51) Int. Cl.: A47J 31/60, A47J 31/40

(54) **DAMPFFUNKTION AM ENDE EINES BRÜHVORGANGS**
STEAM FUNCTION AT THE END OF A BREWING PROCESS
FONCTION VAPEUR À LA FIN D'UN PROCESSUS D'INFUSION

(30) Priorität: 01.02.2007 DE 102007005105; 11.07.2007 DE 102007032288
(43) Veröffentlichungstag der Anmeldung: 22.10.2008
(73) Patentinhaber: BSH Bosch und Siemens Hausgeräte GmbH, 81739 München (DE)
(72) Erfinder: STADLER, Stefan, 83376 Truchtlaching (DE); AIGNER, Andreas, 83313 Siegsdorf (DE); DABURGER, Josef, 83313 Siegsdorf / Hammer (DE); GIUS, Josef, 83374 Traunwalchen (DE); MAGG, Johann, 83368 St. Georgen (DE)
(86) Internationale Anmeldenummer: PCT/EP2008/050368
(87) Internationale Veröffentlichungsnummer: WO 2008/092734

(56) Entgegenhaltungen:
- US-A1- 2007 044 664
- US-B1- 6 405 637

## Beschreibung

Die vorliegende Erfindung betrifft ein Verfahren zum Zubereiten von Heißgetränken in einer Heißgetränkemaschine, bei welchem in einem ersten Schritt eine bestimmte Wassermenge aus einem Wassertank in eine Heizeinrichtung gepumpt wird. In einem zweiten Schritt wird diese Wassermenge in der Heizeinrichtung erhitzt. In einem dritten Schritt wird die erhitzte Wassermenge aus der Heizeinrichtung in eine Brühkammer und gleichzeitig eine weitere Wassermenge aus dem Wassertank in die Heizeinrichtung gepumpt. In einem vierten Schritt wird eine in der Brühkammer befindliche Brühsubstanz zu einem Heißgetränk aufgebrüht. Die Schritte müssen dabei nicht zwingend in voneinander getrennten Intervallen ablaufen, sondern können auch einander zeitlich überlagernd oder gleichzeitig stattfinden. Die Schritte sind also im Wesentlichen als Definition jeweils eines Verfahrensbestandteils zu verstehen. Während eines Zubereitungsvorgangs können die Schritte auch mehrmals ausgeführt werden. Bei der Heißgetränkemaschine kann es sich zum Beispiel um eine Pad-Kaffeemaschine handeln.

Aus der US 6,405,637 B1 ist eine Filterkaffeemaschine bekannt, die prinzipiell nach dem oben dargestellten Verfahren arbeitet. Ein Ventil am Filterausgang, das nur bei untergestellter Kaffeekanne geöffnet ist, verhindert ein Nachtropfen von Kaffee aus dem benutzten Filter.

Aufgabe der vorliegenden Erfindung ist es, eine Heißgetränkemaschine derart weiterzubilden, dass ein Nachlaufen am Getränkeauslauf am Ende eines Brühvorgangs auch ohne Ventil vermieden wird.

Diese Aufgabe wird gelöst durch die Merkmale des Patentanspruchs 1, wonach bei einer gattungsgemäßen Heißgetränkemaschine die Leistung der Pumpe und/oder die Leistung der Heizeinrichtung am Ende des Zubereitungsvorgangs eines Getränks gezielt derart gesteuert wird, dass die zuletzt in die Heizeinrichtung gepumpte Wassermenge nahezu vollständig in Dampf umgewandelt wird. Zum Abschluss des Zubereitungsvorgangs wird also gezielt die letzte Wassermenge möglichst vollständig in Dampf umgewandelt. Das Verfahren lässt sich vorzugsweise mit Durchlauferhitzern durchführen, die in der Regel mit einer hohen Oberflächentemperatur von über 100° Celsius betrieben werden. Fördert nämlich die Pumpe kein kaltes Wasser nach und kühlt damit die erhitzte Oberfläche nicht ab, verdampft das letzte Wasser in der Heizeinrichtung. Die mit der Dampfbildung einhergehende Expansion drückt dann zumindest mit einem Teil des entstandenen Dampfs sämtliche Flüssigkeiten wie Wasser und/oder Reste des Heißgetränks aus allen der Heizeinrichtung nachgeschalteten fluidführenden Komponenten der Heißgetränkemaschine hinaus. Dadurch kann nach Abschluss der Zubereitung kein Getränk oder Wasser am Getränkeauslauf nachlaufen oder -tropfen.

Während des gesamten Zubereitungsvorgangs ist die Heizeinrichtung bevorzugt dauerhaft eingeschaltet. Dies erspart unnötige Schaltvorgänge der Heizeinrichtung. Die Pumpe kann entweder impulsweise in Zeitintervallen arbeiten, also in einem Impuls-Pausenverhältnis. Demnach folgt abwechselnd ein Betriebsintervall (Impuls), in der die Pumpe läuft, einem Pausenintervall (Pause). Während der Pausenintervalle erhitzt die Heizeinrichtung die in ihr befindliche Wassermenge auf eine bestimmte Brühtemperatur. Durch eine entsprechende Ansteuerung fördert die Pumpe das brühheiße Wasser rechtzeitig aus der Heizeinrichtung in die Brühkammer und gleichzeitig neues kaltes Wasser aus dem Wassertank in die Heizeinrichtung. Denn eine Erzeugung von Dampf während des Erüh- bzw. Zubereitungsvorgangs ist an sich nicht erwünscht. Das beste Brühergebnis wird nämlich bei einer Brühtemperatur des Wassers deutlich unter der Siedetemperatur erreicht; Temperaturen oberhalb der optimalen Brüh- oder gar Siedetemperatur können dagegen einen negativen Einfluss auf die Geschmacksentfaltung des Heißgetränks haben.

Die Pumpe kann bei eingeschalteter Heizeinrichtung alternativ auch kontinuierlich arbeiten. Die Pumpleistung bewirkt dann eine Wassergeschwindigkeit durch die Heizeinrichtung, die eine Erhitzung des Wassers auf die erforderliche Temperatur ermöglicht. Die Pumpe transportiert das Wasser anschließend kontinuierlich weiter von der Heizeinrichtung in die Brühkammer. Der kontinuierliche Pumpenbetrieb erübrigt unnötige Schaltvorgänge der Pumpe und erhöht damit deren Lebensdauer. Die Heizleistung ist demzufolge abhängig von der Ausgangstemperatur des Wassers, von der gewünschten Brühtemperatur und vom Volumenstrom des Wassers. Zur Anpassung der Heizleistung an Veränderungen dieser Parameter kann ihre Leistungsabgabe entsprechend geregelt oder die Heizeinrichtung getaktet betrieben werden.

Am Ende des Zubereitungsvorgangs wird die Heizeinrichtung nicht gezielt leer gepumpt, sondern die Pumpe und die Heizeinrichtung werden im Wesentlichen gleichzeitig abgeschaltet. In der Heizung kann folglich eine Restmenge an Wasser verbleiben. Da die Heizeinrichtung aufgrund ihrer hohen Betriebstemperatur jetzt noch über eine ausreichende Restwärme verfügt, wird die letzte in der Heizeinrichtung befindliche Wassermenge vollständig über den Siedepunkt hinaus erhitzt. In der Heizeinrichtung entsteht daher Wasserdampf und infolge der damit einhergehenden Volumenvergrößerung Druck, der zu einem kurzen Dampfstoß führt. Aufgrund des Drucks werden sämtliche Flüssigkeitsreste aus der Heizeinrichtung selbst und aus den stromab davon angeordneten Leitungen sowie der Brühkammer und einem Pad bzw. einer Kapsel darin hinausgedrückt. Sofern die Maschine weitere Komponenten, wie z. B. eine Aufschäumkammer oder einen Auslauf aufweist, werden auch diese vollständig entleert. Da die gesamte Wassermenge in der Heizeinrichtung verdampft und die stromab liegenden Leitungen leerdrückt, kann nach Abschluss der Getränkezubereitung kein Wasser mehr nachtropfen. Außerdem wird jedes Getränk mit frisch erhitztem Wasser gebrüht. Die Verwendung von u.U. mit Keimen belastetem Restwasser aus der Getränkemaschine für die Getränkezubereitung kann so gut wie ausgeschlossen werden.

Neben der Flüssigkeitsentleerung hat die Durchleitung von Wasserdampf auch einen reinigenden bzw. desinfizierenden Effekt. Das führt insbesondere bei längerer Nichtbenutzung der Kaffeemaschine zu einer verbesserten Hygiene.

Ein weiterer Vorteil ist der Trocknungseffekt. Der Dampf bläst aus den Leitungen der Brühkammer und vor allem aus dem darin befindlichen Pad bzw. der Kapsel bisher verbliebene Flüssigkeitsreste aus. Da der Austausch des Pads bzw. der Kapsel durch einen Bediener von Hand erfolgt, ist damit eine erhebliche Komfortverbesserung verbunden, da bei der Entnahme des Pads bzw. der Kapsel kein Restwasser mehr vorhanden, ist und die Entnahme insbesondere eines getrockneten Pads angenehmer als die eines nassen ist. So wird eine Verschmutzung, wie sie z. B. beim Transport eines nassen tropfenden Pads von der Kaffeemaschine bis in einen Müllbehälter aufträte, weitgehend ausgeschlossen.

Das Verfahren kann sowohl bei Padmaschinen als auch bei Maschinen für Getränkekapseln eingesetzt werden. Wie Pads können die Kapseln eine feste pulverförmige Brühsubstanz enthalten. Alternativ können sie mit einem flüssigen Brühkonzentrat oder einem löslichen Pulver befüllt sein. Das Heißgetränk entsteht dann durch Verdünnung des Konzentrats bzw. der Lösung des Pulvers mit heißem Wasser. Es wird bei der Getränkezubereitung in die Kapsel geleitet und spült das Konzentrat oder das Pulver aus.

Durch den Zeitpunkt der Abschaltung der Heizung relativ zur Pumpe kann die Intensität des Dampfstoßes gesteuert werden. Eine Steigerung kann dadurch erzielt werden, dass die Heizung zeitverzögert gegenüber der Pumpe abgeschaltet wird. Nach einer vorteilhaften Ausgestaltung der Erfindung kann die Pumpe zeitverzögert gegenüber der Heizeinrichtung abgeschaltet werden. Dadurch kann der Dampfstoß in seiner Wirkung gemildert werden, so dass ausgetriebenes Wasser weniger schnell aus dem Auslauf schießt und infolgedessen spritzt.

Die Intensität des Dampfstoßes kann dann außerdem noch über die Charakteristik der Heiz- bzw. Pumpleistung beim Abschalten beeinflusst werden. Wird beispielsweise die Heizung sofort und die Leistung Pumpe nicht sofort vollständig, sondern langsam zurückgefahren, so lässt sich dadurch der Dampfstoß ebenfalls abmildern. Umgekehrt lässt er sich steigern, wenn die Heizleistung ab dem Zeitpunkt der Abschaltung der Pumpe kontinuierlich zurückgefahren wird. Durch beide Steuerungen lässt sich also der Dampfstoß noch differenzierter steuern als nur über die Zeitpunkte der Abschaltung von Heizung und Pumpe.

Nach einer weiteren vorteilhaften Ausgestaltung der Erfindung kann am Ende des Brühvorgangs die Dampfdurchleitung auch dazu verwendet werden, ein oder mehrere Siebe zu reinigen, die sich in der Flüssigkeitszuleitung vor, nach oder in der Brühkammer befinden. Die regelmäßige Reinigung solcher Siebe verlängert deren Standzeit und reduziert zugleich die Anzahl der Wartungsintervalle. Insbesondere bei Anordnung von mehreren Sieben hinter- oder übereinander bzw. bei mehrlagigen Sieben wird dabei neben der Reinigung auch die Entleerung von Kammern zwischen den Sieben am Ende jedes Zubereitungsvorgangs sichergestellt.

Der Ablauf des erfindungsgemäßen Zubereitungsverfahrens einer Getränkemaschine wird im Folgenden beispielhaft anhand einer Zeichnung näher erläutert. In der Zeichnung zeigen:
- Figur 1:: ein Blockschaltbild für einen Impuls-Pausenbetrieb der Pumpe, und
- Figur 2:: ein Blockschaltbild für einen kontinuierlichen Betrieb der Pumpe.

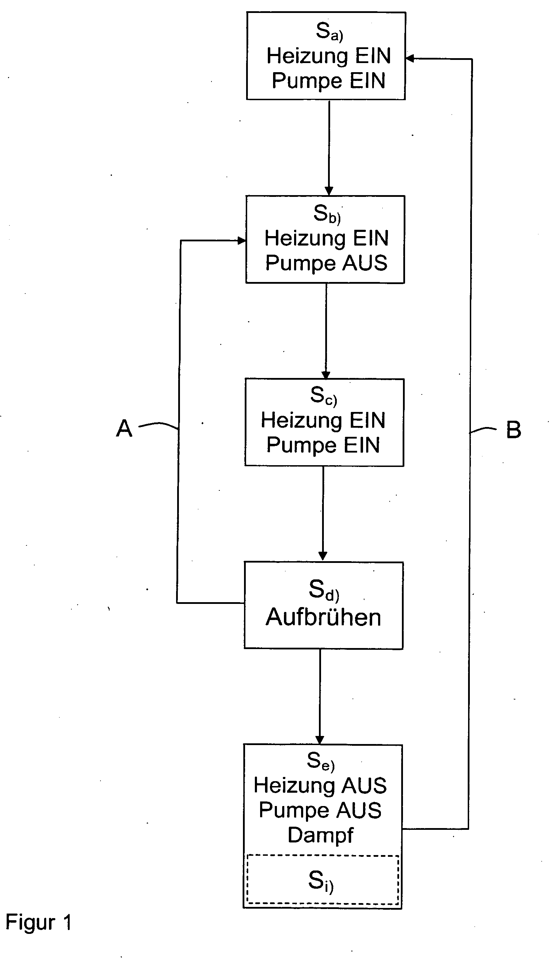

Das Blockschaltbild gemäß Figur 1 zeigt fünf Verfahrenschritte Sₐ₎, S_{b)}, S_{c)}, S_{d)} und Sₑ₎ eines Arbeitsverfahrens einer Getränkemaschine. Ein zusätzlicher Verfahrensschritt, der während Schritt Sₑ₎ ausgeführt wird, ist als Sᵢ₎ bezeichnet. Da Schritt Sᵢ₎ nur erfolgt, wenn die Maschine auch Siebe aufweist, ist er von einer strichlierten Linie umgeben:

In Schritt Sₐ₎ wird nach Eingabe eines Getränkewunsches von einer Steuerungseinrichtung das Einschalten einer Pumpe veranlasst. Sie pumpt Wasser aus einem Wassertank in eine Heizeinrichtung. Die Heizeinrichtung wird ebenfalls eingeschaltet. Danach wird die Pumpe wieder ausgeschaltet, während die Heizeinrichtung eingeschaltet bleibt.

Während Schritt S_{b)} wird das Wasser in der Heizeinrichtung auf eine Brühtemperatur erhitzt. Die Temperatur in der Heizeinrichtung wird dabei von der Steuerungseinrichtung mittels eines NTC-Widerstands überwacht, der in oder an der Heizeinrichtung angeordnet ist. Für verschiedene Getränke können unterschiedliche Brühtemperaturen in der Steuerungseinrichtung hinterlegt sein.

Nach dem Erreichen der Brühtemperatur schaltet die Steuerungseinrichtung die Pumpe wieder ein (Schritt S_{c)}), wobei die Heizeinrichtung eingeschaltet bleibt. Dadurch wird das brühheiße Wasser aus der Heizeinrichtung in eine Brühkammer gepumpt. Währenddessen wird die Heizeinrichtung wieder mit kaltem Wasser aus dem Wassertank gefüllt. Sobald die Heizeinrichtung gefüllt ist, wird die Pumpe wieder abgeschaltet.

In der Brühkammer hat das brühheiße Wasser nun Zeit mit einer darin befindlichen Brühsubstanz zu reagieren. Es erfolgt das Aufbrühen der Brühsubstanz zu einer ersten

Teilmenge Heißgetränk (Schritt S_{d)}), die die Brühkammer durch einen Auslauf in einen Getränkebehälter hinein verlässt.

Die Schritte S_{b)}, S_{c)} und S_{d)} werden solange wiederholt, bis eine in der Steuerungseinrichtung für das gewünschte Getränk hinterlegte Wassermenge erreicht ist. Die Wiederholung ist durch den Pfeil A symbolisiert.

Am Ende des Zubereitungsvorgangs, in Schritt Sₑ₎, ändert die Steuerung die Ansteuerung von Pumpe und Heizung; sie werden beide dauerhaft abgeschaltet. Aufgrund der Restwärme in der Heizeinrichtung und des ausbleibenden Abpumpens des erhitzten Wassers steigt seine Temperatur in der Heizeinrichtung jetzt über die Brühtemperatur hinaus bis zu und über den Siedepunkt weiter an.

In der Heizeinrichtung entsteht dadurch Wasserdampf, wodurch sich zugleich der Systemdruck erhöht. Dieser Effekt wird genutzt, um noch in den Leitungen befindliches Wasser oder in der Brühkammer befindliche Reste des Heißgetränks vollständig durch den Auslauf hinauszudrücken. Außerdem können dabei Siebe gereinigt werden (Schritt Sᵢ₎), die z. B. in den Leitungen oder im Bereich der Brühkammer angeordnet sein können.

Es verbleiben somit keine Flüssigkeitsreste in der Maschine, die gerade bei langen Stillstandszeiten zu Ablagerungen führen können. Der heiße Wasserdampf reinigt und desinfiziert die von ihm durchströmten Komponenten und trocknet sie dabei zugleich. Das Trocknen verbessert zudem die Handhabung des verbrauchten Brühsubstanz-Pads, das getrocknet leichter und angenehmer entsorgt werden kann, da ein störendes Tropfen entfällt. Außerdem verringert sich durch die Dampffunktion am Ende des Brühvorgangs die Nachtropfzeit am Auslauf, sofern nicht das Nachtropfen völlig entfällt. Der mit dem Heißgetränk befüllte Behälter kann dadurch schneller aus der Maschine entnommen werden, was den Komfort wesentlich verbessert.

Nach der erneuten Auswahl eines Getränks wiederholt sich die Abfolge des oben beschriebenen Verfahrens, symbolisiert durch Pfeil B.

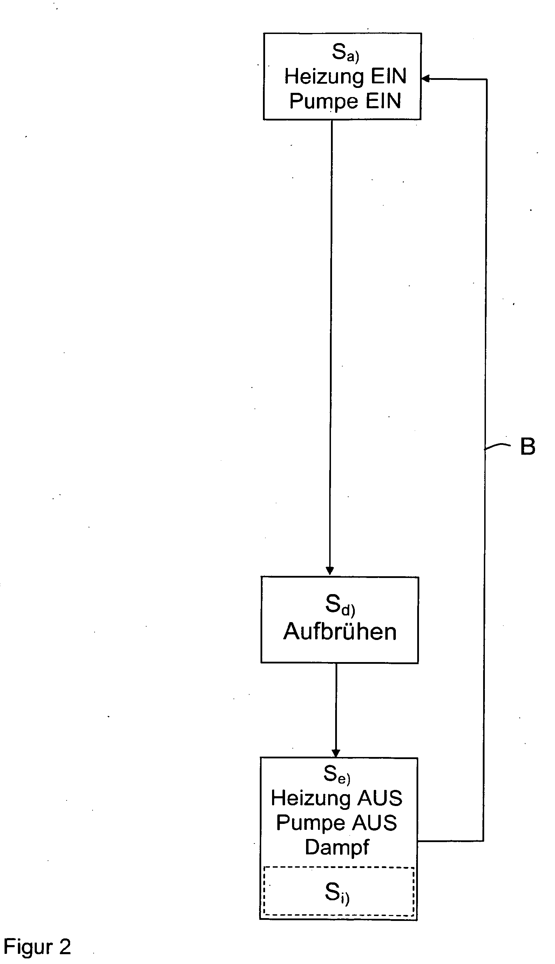

Demgegenüber stellt das Blockschaltbild gemäß Figur 2 ein Verfahren mit kontinuierlichem Pumpenbetrieb dar. Im Gegensatz zum oben dargestellten Verfahren nach Figur 1 pumpt jetzt die Pumpe im Schritt Sₐ₎ kontinuierlich Wasser in die eingeschaltete Heizung. Die Pumpe schaltet erst wieder ab, wenn die gesamte Wassermenge gefördert ist, die für die Zubereitung eines gewählten Getränks erforderlich ist. Der gepumpte Wasserstrom ist also so bemessen, dass das Wasser beim Durchfluss durch die Heizung vollständig auf die erforderliche Temperatur erhitzt wird. Demzufolge wird das brühheiße Wasser zum Aufbrühen des Getränks in Schritt S_{d)} kontinuierlich in einen Brühkammer gefördert, womit die Zubereitung des Getränks in der oben beschriebenen Weise fortgesetzt wird. Auch der Aufbrühvorgang S_{d)} erfolgt also nicht intervallweise oder schwallweise wie in dem in Figur 1 beschriebenen Verfahren, sondern ist durch einen durchgehenden Zustrom an Wasser in die Brühkammer charakterisiert.

## Patentansprüche

1. Verfahren zum Zubereiten von Heißgetränken in einer Heißgetränkemaschine mit folgenden Schritten:
a) Pumpen einer bestimmten Wassermenge aus einem Wassertank in eine Heizeinrichtung,
b) Erhitzen der Wassermenge,
c) Pumpen der erhitzten Wassermenge aus der Heizeinrichtung in eine Brühkammer,
d) Aufbrühen einer in der Brühkammer befindlichen Brühsubstanz zu einem Heißgetränk,
e) gesteuertes Umwandeln der zuletzt in die Heizeinrichtung gepumpten Wassermenge im Wesentlichen vollständig in Dampf zum Hinausdrücken von Flüssigkeiten aus dem Leitungssystem stromab der Heizeinrichtung,
wobei die Schritte a) bis d) bei einem Zubereitungsvorgang ein- oder mehrmals ausgeführt werden.

2. Verfahren nach Anspruch 1 oder 2, **dadurch gekennzeichnet, dass** zur Umwandlung des Wassers in Schritt e) die Pumpe zeitverzögert gegenüber der Heizeinrichtung abgeschaltet wird.

3. Verfahren nach Anspruch 1, **dadurch gekennzeichnet, dass** während Schritt e) als zusätzlicher Schritt
f) Reinigen von Sieben ausgeführt wird.

## Claims

1. Method of preparing hot beverages in a hot drinks machine, comprising the following steps:
a) pumping a defined water quantity from a water tank into a heating device,
b) heating the water quantity,
c) pumping the heated water quantity from the heating device into a brewing chamber,
d) brewing a brewing substance, which is disposed in the brewing chamber, to form a hot beverage, and
e) controlled conversion of the water quantity, which was last pumped into the heating device, substantially completely into steam for forcing liquids out of the duct system downstream of the heating device,
wherein the steps a) to d) are carried out once or several times during a preparation process.

2. Method according to claim 1 or 2, **characterised in that** for converting the water in step e) the pump is switched off with a delay in time by comparison with the heating device.

3. Method according to claim 1, **characterised in that** during step e)
f) cleaning of filters is carried out.
as an additional step.

## Revendications

1. Procédé de préparation de boissons chaudes dans une machine pour boissons chaudes, comprenant les étapes suivantes :
a) pompage d'une quantité d'eau déterminée à partir d'un réservoir à eau dans un dispositif de chauffage,
b) échauffement de la quantité d'eau,
c) pompage de la quantité d'eau échauffée à partir du dispositif de chauffage dans une chambre d'infusion,
d) infusion d'une substance à infuser se trouvant dans la chambre d'infusion pour en donner une boisson chaude,
e) transformation commandée de la quantité d'eau pompée en dernier dans le dispositif de chauffage, essentiellement de manière complète en vapeur pour la sortie sous pression de liquides hors du système de conduites en aval du dispositif de chauffage,
les étapes a) à c) étant exécutées une ou plusieurs fois lors d'une opération de préparation.

2. Procédé selon la revendication 1 ou 2, **caractérisé en ce que,** pour la transformation de l'eau à l'étape e), la pompe est arrêtée de manière temporisée par rapport au dispositif de chauffage.

3. Procédé selon la revendication 1, **caractérisé en ce que,** pendant l'étape e),
f) le nettoyage de filtres est exécuté
en tant qu'étape supplémentaire.
